# EUROPEAN PATENT APPLICATION

(11) **EP 4 576 868 A1**
(43) Date of publication of application: **25.06.2025**
(21) Application number: 23219116.3
(22) Date of filing: 21.12.2023
(51) Int. Cl.: H04W 28/02, H04W 24/02, H04W 28/24

(54) **RADIO NODE PRIORITIZATION**

(71) Applicant: Robert Bosch GmbH, 70442 Stuttgart (DE)
(72) Inventor: Ginthoer, David Osamu, 70197 Stuttgart (DE); Klessig, Henrik, 71272 Renningen (DE); Guillaume, Rene, 71032 Boeblingen (DE); Harutyunyan, Davit, 71032 Boeblingen (DE)

(57) **Abstract**

Radio node prioritization comprises obtaining (41) enrichment information for a plurality of radio nodes comprised in a set of radio nodes (82), obtaining (42) corresponding intended QoS profiles, determining (43) a first subset of radio nodes, wherein each radio node in the first subset has an unmet QoS state, and/or a second subset of radio nodes wherein each radio node in the second subset has an excess QoS state; updating (45) a QoS policy for the plurality of radio nodes, wherein the updating comprises improving the QoS policy related to a first radio node, and/or downgrading the QoS policy related to a second radio node; reconfiguring (46) a base station (84) coupled to the radio nodes based on the updated QoS policy; and transmitting (47) a message to a radio node, wherein the message comprises a QoS notification for changing a QoS policy of the radio node.

## Description

### Technical Field

Aspects of the present specification relate to a computer implemented method of radio node prioritization in a radio system, an apparatus, a wireless communication system, and a computer program element.

### Background

Open radio access network (O-RAN) is a technical concept enabling the improvement of interoperability in the radio access network (RAN). O-RAN provides a standardised architecture and open interfaces. O-RAN disaggregates the 3GPP architecture, and comprises the main components: Radio Unit (RU), Distributed Unit (DU), Centralized Unit (CU), and RAN Intelligent Controller (RIC).

Quality of service (QoS) assurance is an important aspect in mobile communication, especially in industrial applications, which often have stringent QoS requirements in terms of packet error rate (PER), throughput, and delay, as examples of QoS requirements. For some industrial applications, QoS assurance plays a critical role because failing to meet the required QoS might slow down a production process or reduce production efficiency. Accordingly, mechanisms to improve QoS provision in the context of an O-RAN network can be further improved.

### Summary

According to a first aspect, there is provided a computer implemented method of radio node prioritization in a radio system, comprising:
obtaining, for a set of radio nodes communicably coupled to a base station, enrichment information for a plurality of radio nodes comprised in the set of radio nodes;
obtaining, for the plurality of radio nodes comprised in the set of radio nodes, corresponding intended QoS profiles;
determining, using the obtained enrichment information,
   - a first subset of radio nodes comprised in the set of radio nodes, wherein each radio node in the first subset has, or is approaching, an unmet QoS state relative to a QoS policy of the each radio node in the first subset, and/or
   - a second subset of radio nodes comprised in the set of radio nodes wherein each radio node in the second subset has, or is approaching, an excess QoS state relative to a QoS policy of the each radio node in the second subset, wherein an excess QoS state is one in which a given radio node in the second subset can be downgraded or disabled for a duration;
updating a QoS policy for the plurality of radio nodes comprised in the set of radio nodes based on the determined first subset of radio nodes and/or the determined second subset of radio nodes, wherein the updating comprises improving the QoS policy related to a first radio node in the plurality of radio nodes, and/or downgrading the QoS policy related to a second radio node in the plurality of radio nodes;
reconfiguring the base station coupled to the radio nodes comprised in the set of radio nodes based on the updated QoS policy; and
transmitting at least one message to a radio node comprised in the set of radio nodes, wherein the at least one message comprises a QoS notification for changing a QoS policy of the radio node comprised in the set of radio nodes.

Because the frequency spectrum is limited, there may be situations in which the radio resource may not suffice to meet the QoS of all the radio nodes that belong to the a slice with high priority. Furthermore, the static QoS class assigned to all radio nodes might not reflect the criticality of a task executed on a given radio node. Accordingly, in one example of the approach of this specification the question is how to prioritise one user node over others when they all belong to the same network slice and have the same QoS requirements, but the resources are not sufficient to meet the QoS requirements of all nodes due to poor channel conditions or an excess of connected radio nodes. A similar question can be raised when a radio node level traffic prioritisation is applied. In this case, each radio node (for example, comprised inside a camera or an automated mobile robot) serves a QoS flow and is assigned to a QoS profile and again there may be situations in which, due to lack of resources, the QoS requirements defined by the assigned QoS profile of one or more of those radio nodes cannot be satisfied.

For example, the radio nodes may be assigned a quality of service (such as throughput). However, via the enrichment information, the applications that use the radio node can detect and report that they can survive, or function, with lower QoS provision. The applications discover this excess QoS provision using at least the enrichment information, although other network feedback information can supplement the enrichment information. Once an excess of QoS provision for a radio node in the second set of radio nodes has been identified, the radio node in the second subset of radio nodes can be downgraded for a given, predetermined, or calculated duration. The QoS ability (such as extra resource blocks in the time frequency matrix) of the network thus freed can be assigned to other radio nodes.

In another example, the applications that use the radio node can detect and report that they cannot survive, or function, with an existing QoS provision. The applications discover this unmet QoS provision using at least the enrichment information, although other network feedback information can supplement the enrichment information. Once a state of unmet QoS provision for a radio node in the first set of radio nodes has been identified, the radio node is assigned to the first subset of radio nodes so that the radio node can be upgraded in QoS provision for a given, predetermined, or calculated duration, or until another radio node has higher priority requirements.

In a further example, radio nodes have an assigned QoS requirement. An application may detect that, for some of the radio nodes, the QoS requirements are not met (e.g., uplink or downlink guaranteed flow bit rate is lower that the expected value as per the assigned QoS). This can happen due to the fact that the radio resources are limited and in some situations cannot suffice for all the radio nodes and as a result some of them may have unmet QoS. In this example, there is no need to upgrade or downgrade the assigned QoS. Instead the application has to make sure that the radio resources (PRBs) freed as a result of downgrading the QoS of the radio nodes with excess QoS provision are allocated to the radio nodes whose QoS requirements are not met.

An effect of the technique according to the first aspect is that a mechanism is provided to enable the automatic reprioritisation of a QoS rating assigned to individual radio nodes (as one example are user equipment, UE). This enables radio nodes having an urgent need for, for example, better throughput to obtain the required amount of resources in order to meet their QoS requirements since in some situations it may not be possible for the base stations (gNBs, for example) to meet the QoS requirements of all the attached radio nodes.

According to the present specification, it is proposed to hand over radio nodes that may fail to meet their QoS requirement to other base stations, if those base stations have sufficient resources to meet the QoS needs of the given radio nodes. Furthermore, some radio nodes can be down- prioritised relative to other radio notes, while making sure that the quality of service of the down- prioritised radio nodes remains at an acceptable level. In one example, the camera frame resolution of an automated mobile robot (AMR) can be reduced while still being on an acceptable level for processing.

In order to provide a basis for selecting radio nodes that can be down-prioritized, enrichment information, or context information, about the radio nodes and/or the operating environment of those radio nodes can advantageously be used. For example, the radio nodes do not always need the assigned quality of service level and can still have an acceptable performance level by being assigned a lower quality of service level dependent on the situation of each radio node. For example, an automated mobile robot comprising a radio node may have a higher or lower job execution priority. Even within one job, the state of an automated mobile robot can have an effect on the quality of service requirements. For example, if an automated mobile robot is moving slowly, during a parking operation, the network traffic level would look very different compared to when the automated mobile robot would be moving at full speed. Moreover, not all radio nodes always need to be operational, for example, not all camera streams may be required all the time on a shop floor in an industrial mobile network deployment scenario.

In general, this specification proposes to change the quality of service profile assigned to radio nodes, For example in an O-RAN network, and in particular to select and down- prioritise selected radio nodes in order to meet the throughput demand of the radio nodes that requires a particular quality of service profile within a predefined time period.

According to a second aspect, there is provided an apparatus comprising:
a radio interface, a processor, and a memory. The processor is configured to obtain, for a set of radio nodes communicably coupled to a base station, enrichment information for a plurality of radio nodes comprised in the set of radio nodes. The processor is configured to obtain, for the plurality of radio nodes comprised in the set of radio nodes, corresponding intended QoS profiles. The processor is configured to determine, using the obtained enrichment information, a first subset of radio nodes comprised in the set of radio nodes, wherein each radio node in the first subset has, or is approaching, an unmet QoS state relative to a QoS policy of the each radio node in the first subset, and/or to determine, using the obtained enrichment information, a second subset of radio nodes comprised in the set of radio nodes, wherein each radio node in the second subset has, or is approaching, an excess QoS state relative to a QoS policy of the each radio node in the second subset, wherein an excess QoS state is one in which a given radio node in the second subset can be downgraded or disabled for a duration. The processor is configured to update a QoS policy for the plurality of radio nodes comprised in the set of radio nodes based on the determined first subset of radio nodes and/or the determined second subset of radio nodes, wherein the updating comprises improving the QoS policy related to a first radio node in the plurality of radio nodes, and/or downgrading the QoS policy related to a second radio node in the plurality of radio nodes. The processor is configured to reconfigure the base station coupled to the radio nodes comprised in the set of radio nodes based on the updated QoS policy. The processor is configured to transmit at least one message to a radio node comprised in the set of radio nodes, wherein the at least one message comprises a QoS notification for changing a QoS policy of the radio node comprised in the set of radio nodes.

According to a third aspect, there is provided a wireless communication system comprising a set of radio nodes, a controller, and a base station communicably coupled to the set of radio nodes and the controller, and a core network communicably coupled to the base station and the controller, wherein the controller is configured to obtain, for the set of radio nodes, enrichment information for a plurality of radio nodes comprised in the set of radio nodes. The controller is configured to obtain, for the plurality of radio nodes comprised in the set of radio nodes, corresponding intended QoS profiles.

The controller is configured to determine,
- based at least partially on the enrichment information obtained by executing the application, a first subset of radio nodes comprised in the set of radio nodes, wherein each radio node in the first subset has, or is approaching, an unmet QoS state relative to a QoS policy of the each radio node in the first subset, and/or
- to determine, based at least partially on the enrichment information obtained by executing the application, a second subset of radio nodes comprised in the set of radio, wherein each radio node in the second subset has, or is approaching, an excess QoS state relative to a QoS policy of the each radio node in the second subset. An excess QoS state is one in which a given radio node in the second subset can be downgraded or disabled for a duration.

The controller is configured to update, via executing the application, a QoS policy for the plurality of radio nodes comprised in the set of radio nodes based on the determined first subset of radio nodes and/or the determined second subset of radio nodes, wherein the updating comprises improving the QoS policy related to a first radio node in the plurality of radio nodes, and/or downgrading the QoS policy related to a second radio node in the plurality of radio nodes.

The controller is configured to reconfigure the base station coupled to the radio nodes comprised in the set of radio nodes based on the updated QoS policy; and the controller is configured to transmit at least one message to a radio node comprised in the set of radio nodes, wherein the at least one message comprises a QoS notification for changing a QoS policy of the radio node comprised in the set of radio nodes.

According to a fourth aspect, there is provided a computer program element comprising machine readable instructions which, when executed by a processor, causes the processor to execute the computer implemented method according to the first aspect, or its embodiments.

### Brief Description of the Drawings

Exemplary embodiments are depicted in the figures, which are not to be construed as limiting the claims, and are explained in greater detail below. Where possible, like reference numerals denote analogous or like features in different figures.
- Fig. 1: Illustrates a generic open RAN architecture.
- Fig. 2: schematically illustrates a method according to the first aspect.
- Fig. 3: schematically illustrates an embodiment of the method according to the first aspect.
- Fig. 4: schematically illustrates signalling in a radio system according to an example.
- Fig. 5: schematically illustrates signalling in a radio system according to another example.
- Fig. 6: schematically illustrates an apparatus according to the second aspect.
- Fig. 7: schematically illustrates a system according to the third aspect.

### Detailed Description

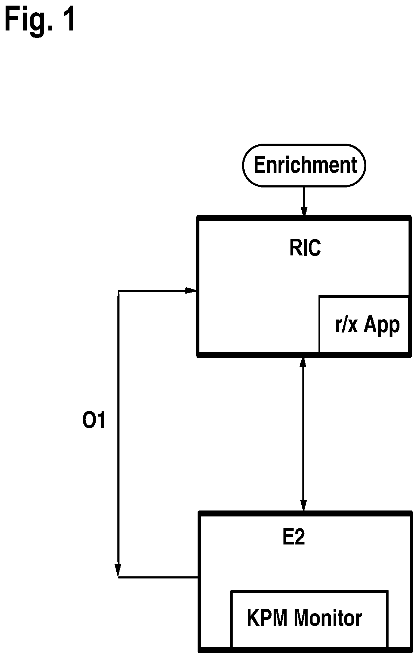

Fig. 1 illustrates a generic open RAN architecture.

The RAN intelligent controller RIC is the controlling point of the O-RAN architecture. The RIC enables better programmability and optimization of the radio Access Network RAN via a non real-time RIC (non-RT RIC) and a near real-time RIC (Near-RT RIC). The RIC provides a service- based software platform where applications referred to in the art as "rApps" for Non-RT RIC, and "xApps" for Near RT RIC are running. Non-RT and Near-RT RICs support control and management of the RAN with a control loop with E2 nodes. An example of E2 nodes is a distributed unit DU or a centralised unit CU.

In an example, a near real-time time horizon is between 10 milliseconds to one second of granularity. According to an embodiment, an xApp is capable of resolving events to between 10 milliseconds to one second of granularity.

In an example, a non real- time horizon is of more than one second of granularity. According to an embodiment, an rApp is capable of resolving events above one second in granularity.

Via standardised application programming interfaces APIs, a user can develop use- case specific or deployment- specific applications that optimise the RAN tailored to the required needs and requirements. For example, see the document 3GPP TS 23.510 version 17.6.0 Release 17: "System architecture for the 5G system".

For contextualization, the example system of Fig. 1 introduces the O-RAN components.

The RAN intelligent controller (RIC) can be either a near-RT RIC or a Non-RT RIC. The near-RT RIC is an O-RAN component enabling near real- time control and optimization of O-RAN nodes (such as the CU, DU, eNB, gNB) and resources. The non-RT RIC is an O-RAN component whose primary goal is to support intelligent RAN optimization by providing policy- based guidance, ML model management, and enrichment information to the Near-RT RIC function.

An rApp hosted by the Near-RT RIC and/or an xApp hosted by the Non-RT RIC provide value added services. The rApp hosted by the Near-RT RIC and/or an xApp hosted by the Non-RT RIC denote a generic name of an application that is deployed on a respective RIC. An rApp may transform into an xApp, or vice versa, dependent on the connection between RICs and the external information sources.

In the present specification, the term "r/xApp" is a generic name of an application that is deployed on one, or more, RICs. In this specification, any application denoted by "r/xApp" can be either an "rApp" (as defined in the foregoing paragraph), an "xApp" (as defined in the foregoing paragraph), or both depending on various factors such as the connections between the RICs and the external information sources. In other words, the RIC may host a non-real time application, a near real-time application, or both. In other words, "rApp" and "xApp" are used interchangeably in the following specification.

The Key Performance Metric (KPM) monitor is a RAN function in an E2 node (such as the DU, CU, eNB, gNB). The KPM monitor exposes the available measurements to the xApp on the Near-RT RIC which can be subscribed to obtain this report over the E2 interface, as well as to the rApp on the Non-RT RIC subscribed to get this report over the O1 interface. The closer the control loop of the RIC is to the E2 node, the faster the measurements that can be obtained, and the faster a given algorithm can be executed.

A policy is a set of rules that are used to manage and control the changing a slash or maintenance of the state of one or more managed objects in the system. In the present specification, the policy is created to change the QoS profile of the target radio node (such as a radio node).

Enrichment information or context information is information provided by an O-RAN internal or external information source through a connection with a Near-RT RIC or a Non-RT RIC. In the present specification, the external information sources can be one or more of wireless sensors, cameras, autonomous mobile robots (AMRs), automated guided vehicles (AGVs), mobile phones, industrial machines, and others.

At present, there is a requirement to automatically re prioritise radio nodes that already have a QoS assigned individually, or in a slice level.

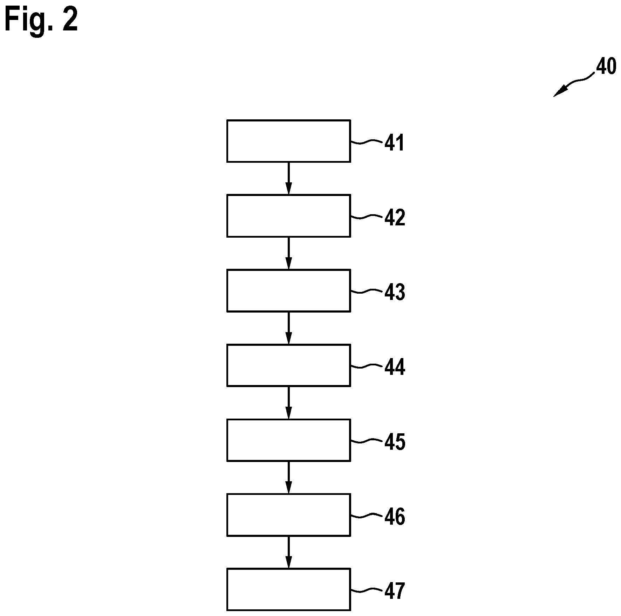

Fig. 2 schematically illustrates a method according to the first aspect.

According to a first aspect, there is provided a computer implemented method 40 of radio node prioritization in a radio system 80, comprising:
obtaining 41, for a set of radio nodes 82 communicably coupled to a base station 84, enrichment information for a plurality of radio nodes comprised in the set of radio nodes 82;
obtaining 42, for the plurality of radio nodes comprised in the set of radio nodes 82, corresponding intended QoS profiles;
determining 43, using the obtained enrichment information, a first subset of radio nodes comprised in the set of radio nodes 82, wherein each radio node in the first subset has, or is approaching, an unmet QoS state relative to a QoS policy of the each radio node in the first subset;
determining 44, using the obtained enrichment information, a second subset of radio nodes comprised in the set of radio nodes 82, wherein each radio node in the second subset has, or is approaching, an excess QoS state relative to a QoS policy of the each radio node in the second subset, wherein an excess QoS state is one in which a given radio node in the second subset can be downgraded or disabled for a duration;
updating 45 a QoS policy for the plurality of radio nodes comprised in the set of radio nodes 82, wherein the updating comprises improving the QoS policy related to a first radio node in the plurality of radio nodes, and/or downgrading the QoS policy related to a second radio node in the plurality of radio nodes;
reconfiguring 46 the base station 84 coupled to the radio nodes comprised in the set of radio nodes 82 based on the updated QoS policy; and
transmitting 47 at least one message to a radio node comprised in the set of radio nodes 82, wherein the at least one message comprises a QoS notification for changing a QoS policy of the radio node comprised in the set of radio nodes 82.

The performance of the radio nodes (for example, as comprised in an automated mobile robot, automated vehicle, or camera) can be improved by the method according to the first aspect. This method ensures that radio nodes that require a predetermined QoS get a sufficient amount of radio resources to meet their QoS requirements. The QoS requirements For each radio node are determined taking into account contextual information (enrichment information) of the radio node, or of a device that the radio node is comprised within or near to. As one example, if the radio node is comprised in an automated mobile robot, it can be considered if the camera stream transmitted by the automated mobile robots is actually needed for a certain period of time, or if the video frame resolution can be reduced, thus enabling the up-prioritization of other radio nodes in the same time period.

According to an embodiment, the computer implemented method is executed by a RAN Intelligent Controller, RIC, of an O-RAN network.

According to an embodiment, radio node prioritisation of the radio nodes is performed on a per-slice level. When sliced- level radio node prioritisation is performed, a predetermined QoS profile is assigned to a network slice and applied to all radio nodes belonging to that network slice. For example, a QoS profile of a QoS flow, which may be either "guaranteed bit rate" (GBR)" or "non-guaranteed bit rate" (non-GBR) is signalled to the radio access network, which then treats not set of radio nodes in such a way as to meet the requirements of the QoS flow.

According to an embodiment, the QoS profile of a GBR QoS slow has requirements selected from the set of: uplink or downlink guaranteed flow bit rate, uplink or downlink maximum flow bit rate, uplink maximum packet loss rate, or downlink maximum packet loss rate.

According to an example, a group of radio nodes may be configured with predetermined uplink and downlink GFBR, MSBR, and MBLR requirements.

According to an embodiment, radio node prioritisation of the radio nodes is performed at the radio node level.

According to an embodiment, radio node prioritisation of the radio nodes is performed at the user level.

According to an embodiment, the re prioritisation of one or more radio nodes is performed using enrichment information of the one or more radio nodes Before, during, and/or after the relevant time period. For example, if the radio node is an automated mobile robot, the priority of execution can be considered.

For example, if the radio node is comprised in a camera, a decision can be made in the RIC as to whether, or not, the camera stream is currently needed for a certain period of time, or if the video frame resolution can be reduced. The enrichment information may comprise, for example, the presence of a pedestrian or other vehicle in the field of view of the camera. According to one example, the presence of a pedestrian would imply that the camera data should be transmitted with high priority, for example. The absence of a pedestrian in the field of view of the camera would imply that the camera data should not be transmitted with a high priority, if at all, for example. Therefore, the presence or not of a pedestrian in the field of view of the camera can be considered to be one example of enrichment information.

Without exploiting the enrichment information, there may be situations in which the radio resources (physical resource blocks) of the base station will not suffice to meet the QoS requirements of the attached radio nodes, which in turn leads to degradation of some radio nodes. According to an embodiment, radio resources are utilised more efficiently by reducing data rate and latency requirements to a necessary minimum. Instead of blindly following a static QoS profile throughout the lifetime of a radio node in the network, the proposed solution dynamically adjusts the QoS rules as it fulfils the QoS requirements.

According to an embodiment the enrichment information is characterized by one, or more, of a binary flag indicating link health between a respective radio node and the base station 84, an application status of at least one application executing on a radio node, and/or a message from an application executing on a radio node defining a required link quality.

According to an example, the enrichment information is received at the RAN intelligent controller via the A1 interface of the O-RAN system. In particular, the A1 interface may enable communication between at least two RICs and can support generic policy management, data transfer, and the like. A skilled person will appreciate that there are many ways that the enrichment information can be received by the RIC, and use of the A1 interface is one example. In example, the enrichment information can be used to assist model training for artificial intelligence.

According to an example, the context or enrichment information is sent from the application that one or more radio nodes use to the RIC. For example, the radio nodes could support a video application comprising video from each of a plurality of factory robot each comprising radio nodes. In a basic example, the enrichment information is a binary indicator that the link resource allocation for the application is healthy or not. If not, then the RIC is requested to step- wise increase the resource allocation for that application until the application sends a message to the RIC that the connection is healthy. For example, the video application can indicate that the video quality from one or more factory robots comprising the respective radio nodes is above or below a minimum video quality threshold. In an example, the video quality threshold may be binary, or quantized amongst a low number of levels, such as four bits. In this example, the video application sends the enrichment information (based on the video quality measure) to an rApp hosted by a near RT-RIC or an xApp hosted by a non-RT RIC.

According to an embodiment, the context or enrichment information is application-detailed. In other words, the context or enrichment information is based on an application status of at least one application executing on a radio node. In other words, the application provides detailed information, which is utilised by the xApp or rApp hosted on one of the RICs to prioritise radio nodes. For example, if the radio node is an automated mobile robot with offloaded video processing, the application can provide the RIC with the job execution priority of the automated mobile robot, the desired frame rate and video resolution that such that the xApp or rApp hosted on one of the RICs can estimate the desired throughput and radio node priority relative to other radio nodes that the RIC should service.

According to an embodiment, the application, which is the source of the enrichment information, is configured to provide more detailed performance information to the RIC so that the r/xApp hosted on the RIC can make a quicker and more goal- driven optimization of the resource allocation.

According to an embodiment, the RIC hosts an application, for example an xApp or an rApp, that is configured to determine the first set of radio nodes. According to an embodiment, the RIC hosts an application, for example an xApp or an rApp, that is configured to determine the second set of radio nodes. According to an embodiment, the RIC hosts an application, for example an xApp or an rApp, that is configured to determine both the first and the second set of radio nodes.

In the video application example, the application (for example, the xApp or the rApp) can provide to the RIC feedback specifying how much the video quality deviation is. Then, the r/xApp hosted on the RIC can interpret the deviation and allocate a more appropriate amount of additional resources to the application in a timely manner.

According to an embodiment, the application is considered to have the best information about the resources that it needs. In this case, the application informs the RIC of its requirements. In this case, the xApp or rApp collects this information from the RIC and translates the adopted requirement to the configuration of the RAN. For example, a robot control application may inform the RIC that for a specific time window, a given end-to-end latency is required. For example, an automated robot that is scheduled, via a routefinding application, to drive at high speed for a predefined amount of time may decrease the required end to end latency for this time window.

The options provided in the foregoing four paragraphs are sorted according to increasing levels of detail that the end application should provide to the RIC about the communication system. Combinations of these options are also included. Dependent on the actual implementation, it can be distinguished if the context or enrichment information describes a minimum or a target KPI (such as a minimum, or a desired, level of throughput).

According to an embodiment, the QoS state is characterized by at least one of downlink guaranteed flow bit rate, downlink maximum flow bit rate, downlink maximum packet loss rate, uplink guaranteed flow bit rate, uplink maximum flow bit rate, and/or uplink maximum packet loss rate. A skilled person will appreciate that the aforementioned parameters are examples of parameters that can characterize the QoS state, and that further examples exist.

According to an embodiment, at least one radio node in the set of radio nodes 82 is comprised in a mobile telephone, an automated mobile robot, or a vehicle.

According to an embodiment, determining the first subset of radio nodes based on the set of radio nodes 82 comprises collecting all radio nodes of the set of radio nodes 82 with, or approaching, an unmet QoS state, for each collected radio node, ranking the severity of the unmet QoS state for the corresponding radio node, and generating an ordered list of the radio nodes in the first subset of radio nodes ordered from the highest severity of the unmet QoS state to the lowest severity of the unmet QoS state.

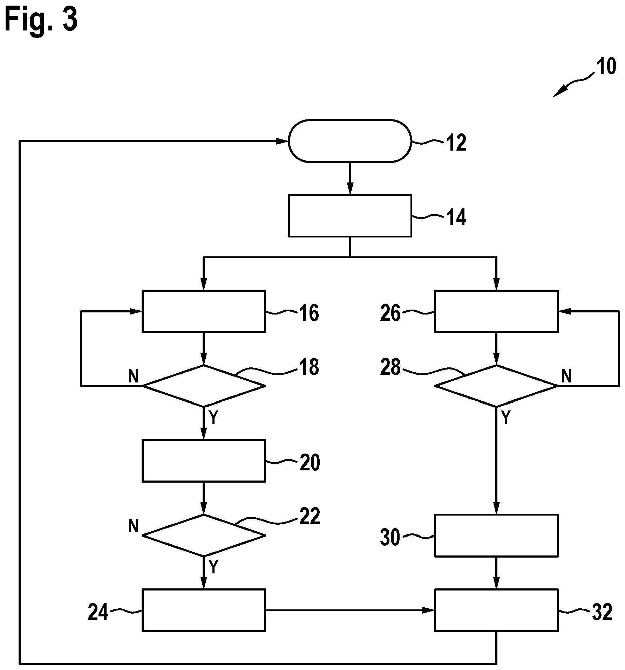

Fig. 3 schematically illustrates an embodiment of the method 10 according to the first aspect.

The computer implemented method 10 is initialised at 12. Context or enrichment information of a plurality of radio nodes communicability coupled to the RIC are obtained at 14, as discussed previously.

As an example implementation, an enrichment information job is created by the RIC to collect enrichment information from external sources (such as automated mobile robots or cameras) for these specified radio nodes. This job, once executed, sends the external enrichment information to the RIC. Of course, a skilled person may provide other implementations as well, and the foregoing is a non-limiting example.

At 16, radio nodes with an unmet quality of service requirement are periodically identified. At 18, if any radio nodes are found with an unmet quality of service, Programme flow continues so that an operation 20 is performed to find the radio nodes that require a better quality of service. If radio nodes are found that need a better quality of service, the respective radio nodes are prioritised and stored 24 in a database of radio notes that require prioritisation.

In more detail, a mechanism is in place to periodically track the KPIs of radio nodes such as throughput, latency, packet error rate in order to detect disparities per radio node of a respective QoS requirement. For example, the radio node throughput of a respective radio node may be much lower than the GBR set by the assigned QoS profile. Once such radio nodes have been found, it has to be identified for which of those radio nodes it is vital that the quality of service requirement is satisfied. For example, an automated mobile robot executing a high priority job requires the network to make sure that the assigned QoS service is fully satisfied such that the automated mobile robot always achieves the required throughput throughout the job execution. In contrast, for some radio nodes, while the experienced throughput may be lower and the packet error ratio may be higher than the desired value defined by the assigned quality of service profile, the quality of service profile may still be acceptable and therefore not have a significant impact on the performance of applications hosted by such radio nodes. For example, a lower video frame resolution for an automated mobile robot with offloaded video processing may still be acceptable for the automated mobile robot. Such radio nodes once discovered, are then prioritised, for example, in a descending order according to the need for improving the quality of service.

According to an embodiment, determining the second subset of radio nodes based on the set of radio nodes comprises collecting all radio nodes of the set of radio nodes 82 with an excess QoS state, for each collected radio node, ranking the severity of the excess QoS state for the corresponding radio node, and generating an ordered list of the radio nodes in the second subset of radio nodes ordered from the highest amount of excess QoS state to the lowest amount of excess QoS state.

For example, an excess QoS state is one in which a given radio node in the second subset can be downgraded or disabled for a duration.

According to an embodiment, an excess QoS state is one in which a given radio node in the second subset can be downgraded or disabled for a duration without performance degradation of an application that uses, or is hosted at, the second radio node.

Referring again to Fig. 3, in the parallel branch beginning with process 26, radio nodes that can be down- prioritised or disabled of (for example, in a relevant time window) are identified. At step 28, if any radio nodes are found that meet such a condition, a process 30 of prioritising and storing such radio nodes is performed.

In a step 32, the database of radio nodes formed at 24 (radio nodes requiring better quality of service) and the database formed at 30 (radio nodes that can be down prioritised) are compared. One, or more radio nodes in the database of radio nodes that can be down- prioritised formed at step 30 are down-prioritized.

In more detail, the branch of Fig. 3 showing steps 26, 28, and 30 provides a mechanism that periodically discovers radio nodes that can be down prioritised (for example, assigned a lower quality of service). Or, such radio nodes can be handed over to other radio access technologies or cells, or even disabled in the considered time window. For example, an automated mobile robot that is executing a job with a lower priority can be down- prioritised or a mobile- network-connected video camera can be temporarily disabled or switched off for a certain time if its video stream is not required during the considered time window. This way, the available radio resources (PRBs) can then be assigned by the scheduler of the attached base station (eNB, gNB, DU) to the radio nodes for which it is vital to meet their QoS requirements. Once such radio nodes have been found, they can be ordered, for example, in a descending order according to the number of radio resources (PRBs) that can be freed as a result of QoS down prioritisation, detaching the radio node, or handing over to another RAT or cell.

Therefore, one exemplary implementation of the left and right hand side branches of the computer-implemented method 10 is now provided. An rApp or an xApp may be developed to collect, for example, the throughput value of all radio nodes of interest in the system. This can be performed by using the "KPM Monitor" RAN function with its REPORT service type (as referenced, for example, in the document O-RAN.WG3.E2SM-KPM-v02.03). More specifically, the r/xApp are configured to subscribe on the base stations (such as the DU, gNB, eNB) for reporting measurements such as throughput, latency, PER, etc for the groups of radio nodes.

The r/xApp Is also configured to obtain enrichment information for radio nodes (for example if those radio nodes are AMRs, then the enrichment information could be the job execution priorities Of the automated mobile robot set by the operator of the AMR described at step 14.

Based on the reported measurements, the radio nodes with unmet quality of service requirements, as well as those with a need for a higher QoS allocation, are identified. Among those radio nodes, and taking into account the enrichment information about the radio nodes, radio nodes that urgently need more radio resource (proportion of PRB) are filtered out in order to satisfy the QoS requirements. Those radio nodes are then prioritised in relation to the enrichment information received at step 14, for example, in a descending order according to the need for an improved quality of service (such as throughput, latency, or PER).

In addition, combining the measurements of the radio nodes of interest with the enrichment information, the decision is made as to which radio nodes can be down prioritised or handed over to another RAT or cell while still ensuring that those radio nodes obtain an acceptable level of QoS. For example, assuming that the decision is to down prioritise the radio nodes, the radio nodes will then be ordered in a descending order according to the radio resources (PRBs) that can be freed as a result of the QoS down prioritisation and the target QoS profile or flow will be defined for the radio nodes.

The implementation of the down prioritisation or prioritisation can be implemented in one of the following ways.

According to an embodiment, the r/xApp can be used to enforce the radio node down-prioritisation and/or up-prioritization by defining policies which will then be enforced by the Near-RT RIC onto the target base stations (DU, gNB, eNB). The radio node down- or-up prioritisation begins with the first radio node in the ordered list, and the policy is created based on the target QoS profile or value of the radio nodes. At the same time, it should be indicated to the base station with freed radio resource (PRBs) as a result of radio noted down- or up- prioritisation, that those PRBs can be reassigned by the scheduler of the base station to the target radio nodes from the defined list starting from the highest radio node in order to improve the quality of service of the highest radio node to begin with, and then moving down the list.

According to another embodiment, the RIC hosting the r/xApp enforces the radio node down- or up- prioritisation by setting the new target quality of service profile for those radio nodes in the core network, if the core network has exposed such APIs to change the QoS profile of the radio nodes. The core network will then enforce that change on the base station (such as a DU, eNB, gNB) serving the radio nodes. At the same time, it should be indicated to the base station with the freed radio resource (PRBs) as a result of radio node down- or up- prioritisation that those radio resources can be reassigned by the scheduler of the base station to the target radio nodes from the defined list starting from the highest priority radio node in order to improve the quality of service of that radio node.

A case may occur when a radio node has a satisfactory QoS state, which then requires uprating owing to increased demand of an application requirement, for example. The following embodiments define a third subset of radio nodes comprising radio nodes having a satisfactory QoS state (in other words, neither an unmet nor an excess QoS state). If the QoS state of a given radio node becomes unmet, that radio node is moved to the first subset, and is thus uprated. If the QoS state of a given radio node enter an excess, that radio node is moved to the second subset, and is thus downrated.

According to an embodiment, there is provided determining, a third subset of radio nodes comprised in the set of radio nodes (82), wherein each radio node in the third subset has a satisfactory QoS state relative to a QoS policy of the each radio node in first subset or the second subset.

According to an embodiment, there is provided determining that at least one radio node comprised in the third subset of radio node has, or within a predetermined duration will experience, an unmet QoS state.

According to an embodiment, the determination is made that at least one radio node comprised in the third subset of radio node has, or within a predetermined duration will experience, an unmet QoS state, at least one radio node comprised in the third subset of radio node is recategorized into the first subset of radio nodes.

Therefore, the examples of the previous three paragraphs define a case in which the current QoS requirement for a radio node is met. However, an even higher QoS may be required within a predetermined duration. This could, for example, occur when a radio node that has been down-prioritized requires up-prioritization at a later time. An extra (third) subset of radio nodes tracks radio nodes each having a satisfactory QoS provision. When the QoS provision of a given radio node in the third subset becomes unsatisfactory, the radio node is recategorized into the first subset of radio nodes to enable the radio node with an unsatisfactory QoS provision to be uprated using the technique already described according to the first aspect above.

According to an embodiment, reconfiguring the base station coupled to the radio nodes comprised in the set of radio nodes based on the updated QoS policy further comprises computing a set of vacated physical resource blocks based on the ordered list of the radio nodes in the second subset of radio nodes, indicating to the base station 84 the set of vacated physical resource blocks, and indicating to the base station 84 the ordered list of the radio nodes in the first subset of radio nodes.

Referring again to Fig. 3, once at least one radio node in each of the left hand side and right hand side branches of Fig. 3 has been discovered, the QoS down-prioritisation commences, starting with the first radio node in the ordered list of radio nodes.

According to an embodiment, the down- prioritised radio nodes may be up-prioritised again after a predetermined duration, if there is no radio node with a lower than expected KPI. That is an urgent need for obtaining unexpected QoS and there is sufficient amount of radio resource (PRB) at the attached base station. According to an embodiment, an xApp and/or an rApp can be developed for this purpose.

According to an embodiment, reconfiguring the base station 84 coupled to the radio nodes comprised in the set of radio nodes 82 based on the updated QoS policy further comprises communicating, to a controller 86, the updated QoS policy of at least one radio node in the set of radio nodes 82, receiving, at the base station 84, at least one base station reconfiguration message generated in the core network based on the updated QoS policy, and reconfiguring the base station 84 using the base station reconfiguration message to thus enforce the updated QoS policy on the radio nodes comprised in the set of radio nodes 82.

For example, the new target QoS profiles of the down- prioritised radio nodes are then fed back from the network to those radio nodes. This way, the radio node or application can adapt its configuration to the new QoS profile, or if there is a failure in the application, the radio node or application can make a better inference on the cause of failure knowing that its QoS profile has been changed. The process of Fig. 3 may be periodically repeated to ensure that the QoS provisioning of radio nodes remains relevant to current conditions.

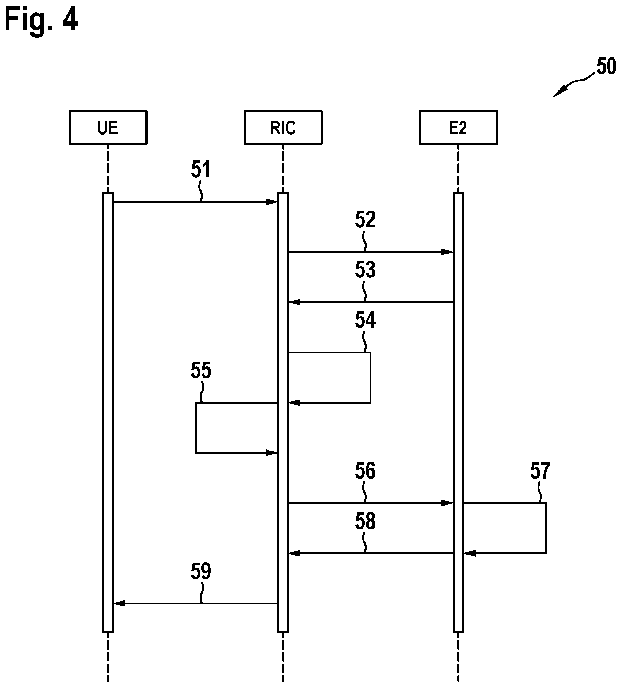

Fig. 4 schematically illustrates signalling 50 in a radio system according to a first implementation example.

In the first implementation example, signalling between the radio node (UE), RIC, and E2 nodes of an O-RAN system is illustrated.

According to a first step 51, external enrichment information, for example job execution priority of a mobile robot, frame rate or resolution, end to end latency, as described in step 14 of Fig. 3 are sent by at least one radio node (UE) to the RIC. According to a second step 52, an application, for example the r/xApp subscribes on the KPM monitor RAN function of the E2 node, which could be a DU, CU, eNB, or a gNB, specifying the identifiers of the radio nodes whose measurements it would like to obtain. According to a third step 53, the E2 nodes periodically send reports to the application hosted on the RIC including the identifiers of the radio nodes and their measurements.

According to a fourth step 54, based on these measurements, the application executing on the RIC discovers the unmet QoS requirements of the respective radio nodes (for example, a low throughput value or high latency). Considering the enrichment information about the respective radio nodes, the application filters out and prioritises radio nodes that urgently need more PRB resource to reach the target QoS. In addition, the external enrichment information obtained from different sources (such as cameras, automated mobile robots, mobile phones, industrial machines, sensors, and the like) enables the application also to identify and prioritise the radio nodes that can be down prioritised and specifies the new target QoS profile for the considered time period. The radio interface controller also communicates the new target quality of service profile to the core network, which in turn changes the quality of service profile of the specified radio nodes.

According to a fifth step 55, the application hosted on the RIC create policies for the radio nodes whose quality of service needs to be down prioritised. According to a sixth step 56, the policies received in step 55 send to the target E2 nodes using, for example, the CONTROL service type in the service model E2SM-RC (as defined in O-RAN.WG3.E2SM-RC-v01.03. According to a seventh step 57, the target E2 nodes receiving the policies implement the changes indicated in the policies for the specified radio nodes (UE1, UE2, UE3). According to an eighth step 58, the E2 node sends a policy enforcement notification to the RIC. According to a ninth step 59, the RIC informs the down-prioritized radio nodes about its new QoS value. The previously described steps are then periodically executed to improve the quality of service of the radio nodes that cannot obtain their desired QoS due to a lack of radio resource (PRBs).

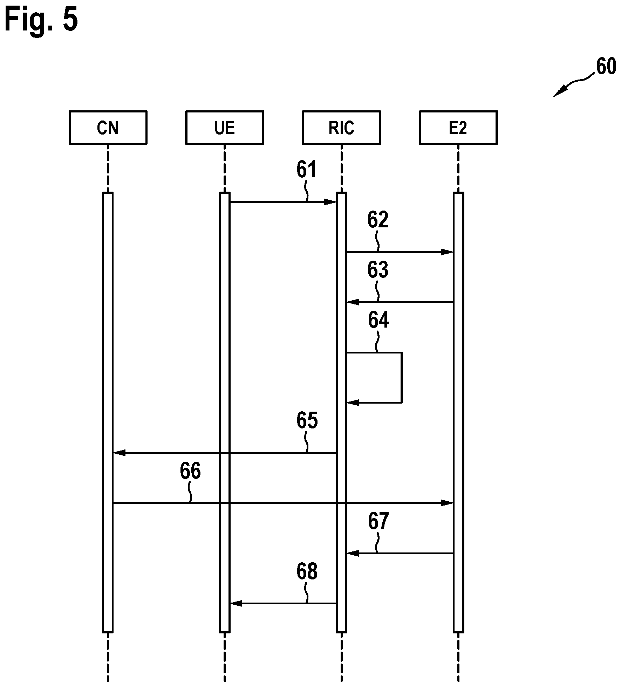

Fig. 5 schematically illustrates signalling in a radio system according to another example.

The sequence diagram of Fig. 5 illustrates an embodiment in which newly set QoS profiles are enforced by the core network onto the base stations serving the radio nodes. Step 61 corresponds to step 51 of Fig. 4. Step 62 corresponds to step 52 of Fig. 4. Step 63 corresponds to step 53 of Fig. 4. Step 64 corresponds to step 54 of Fig. 4.

Step 65 comprises the RIC setting the target QoS profiles for the specified radio nodes using core network APIs. Alternatively, the RAN can trigger an access network (AN) initiated PDU session modification to adjust the QoS in the core network. In step 66, the newly set QoS profile is enforced by the core network CN onto the base stations serving the radio nodes. In step 67, the E2 node notifies the RIC about the new QoS Profile for the radio nodes. In step 68, the RIC forwards the new QoS profile notification to at least one radio node which has previously been down-prioritized.

According to another embodiment, an additional QoS profile is defined by setting its parameters by taking into account the state of the radio node and application, and requirements, in a specified time window. In order to enforce such a QoS profile end to end, the radio access network, the transport network, as well as the core network should be aware of that profile and comply with its requirements. The number of such radio node specific QoS profiles would be limited to the total number of QoS profiles that can be defined and would require standardisation of such radio node specific QoS profiles.

According to a further embodiment, Packet error rate of an existing curious profile can be changed by taking into account the radio node or application state and requirements in the specified time window. This option however also impacts the radio nodes that have assigned the QoS profile whose parameters have been changed.

According to a further option, additional indicators that can be used by the scheduler to treat the PDU session of specific radio nodes differently without changing the assigned QoS can be provided.

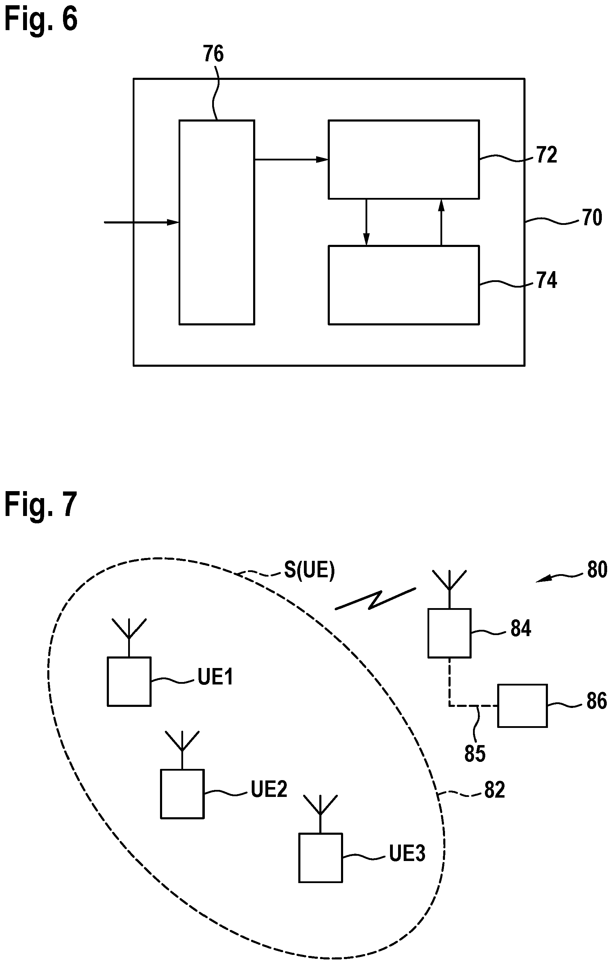

Fig. 6 schematically illustrates an apparatus according to the second aspect.

According to a second aspect, there is provided an apparatus 70 comprising: a radio interface 76, a processor 72, and a memory 74.

The processor 72 is configured to obtain, for a set of radio nodes 82 communicably coupled to a base station 84, enrichment information for a plurality of radio nodes comprised in the set of radio nodes 82, to obtain, for the plurality of radio nodes comprised in the set of radio nodes 82, corresponding intended QoS profiles, to determine a first subset of radio nodes comprised in the set of radio nodes 82, wherein each radio node in the first subset has, or is approaching, an unmet QoS state relative to a QoS policy of the each radio node in the first subset, to determine a second subset of radio nodes comprised in the set of radio nodes 82.

Each radio node in the second subset has, or is approaching, an excess QoS state relative to a QoS policy of the each radio node in the second subset, wherein an excess QoS state is one in which a given radio node in the second subset can be downgraded or disabled for a duration, to update a QoS policy for the plurality of radio nodes comprised in the set of radio nodes 82.

Updating comprises improving the QoS policy related to a first radio node in the plurality of radio nodes, and/or downgrading the QoS policy related to a second radio node in the plurality of radio nodes, to reconfigure the base station 84 coupled to the radio nodes comprised in the set of radio nodes 82 based on the updated QoS policy; and transmit at least one message to a radio node comprised in the set of radio nodes 82, wherein the at least one message comprises a QoS notification for changing a QoS policy of the radio node comprised in the set of radio nodes 82.

The radio interface may comprise a modem, front end, and antenna circuitry for accessing one or more of a fifth generation system, a long term evolution system (LTE), an LTE-advanced system, a high speed packet access system, a universal mobile telecommunications system, an evolved-UTRAN, a global system for mobile communication (GSM), an EDGE system, an IEEE 802.11 system, and the like. According to some embodiments, the mobile communication system may be a V2N network, a C-V2X system. The mobile communication system may support at least two communication modes, such as PC5, which is used between vehicles, and Uu, which is used between vehicles and base stations.

According to a third aspect, there is provided a wireless communication system 80 comprising a set of radio nodes UE1, UE2, UE3, 82, a controller 86, and a base station 84 communicably coupled to the set of radio nodes 82 and the controller 86, and a core network 85 communicably coupled to the base station 84 and the controller 86.

The controller 86 is configured to obtain, for the set of radio nodes 82, enrichment information for a plurality of radio nodes comprised in the set of radio nodes 84. The controller 86 is configured to obtain, for the plurality of radio nodes comprised in the set of radio nodes 82, corresponding intended QoS profiles.

The controller 86 is configured to execute an application, wherein the application is configured to determine a first subset of radio nodes comprised in the set of radio nodes 82, wherein each radio node in the first subset has, or is approaching, an unmet QoS state relative to a QoS policy of the each radio node in the first subset.

The controller 86 is configured to determine, via executing the application, a second subset of radio nodes comprised in the set of radio nodes 82, wherein each radio node in the second subset has, or is approaching, an excess QoS state relative to a QoS policy of the each radio node in the second subset, wherein an excess QoS state is one in which a given radio node in the second subset can be downgraded or disabled for a duration.

The controller 86 is configured to update, via executing the application, a QoS policy for the plurality of radio nodes comprised in the set of radio nodes 82, wherein the updating comprises improving the QoS policy related to a first radio node in the plurality of radio nodes, and/or downgrading the QoS policy related to a second radio node in the plurality of radio nodes.

The controller 86 is configured to reconfigure the base station 84 coupled to the radio nodes comprised in the set of radio nodes 82 based on the updated QoS policy; and
wherein the controller 86 is configured to transmit at least one message to a radio node comprised in the set of radio nodes 82, wherein the at least one message comprises a QoS notification for changing a QoS policy of the radio node comprised in the set of radio nodes 82.

According to an embodiment of the system 80, at least one radio node U E1, U E2, UE3 in the set of radio nodes 82 is comprised in a mobile telephone, an automated mobile robot, or a vehicle, and/or wherein the controller 86 is comprised in an O-RAN network.

In general, the wireless communication system 80 maybe a third generation partnership project (3GPP) standardised mobile communication network. The mobile communication network may correspond to, for example, a fifth generation system, a long term evolution system (LTE), an LTE-advanced system, a high speed packet access system, a universal mobile telecommunications system, an evolved-UTRAN, a global system for mobile communication (GSM), an EDGE system, an IEEE 802.11 system, and the like. According to some embodiments, the mobile communication system may be a V2N network, a C-V2X system. The mobile communication system may support at least two communication modes, such as PC5, which is used between vehicles, and Uu, which is used between vehicles and base stations.

The base station 84 may be a small cell, macro cell, a micro cell, an evolved node B (eNB) or gNodeB The base station 84 is communicably coupled to a controller 86. According to an example, the controller 86 comprises at least one RAN intelligent controller.

According to an embodiment of the system 80, the base station 84 coupled to the radio nodes comprised in the set of radio nodes 82 based on the updated QoS policy is further configured to communicate, to the controller (such as the RAN intelligent controller), a set of vacated physical resource blocks based on the ordered list of the radio nodes in the second subset of radio nodes, and the controller (such as the RAN intelligent controller) is configured to indicate to the base station 84 the set of vacated physical resource blocks assigned to one or more radio nodes registered in the first subset of radio nodes.

According to an embodiment of the system 80, the base station 84 coupled to the radio nodes comprised in the set of radio nodes 82 is further configured, based on the updated QoS policy, to communicate, to the controller 86, the updated QoS policy of at least one radio node in the set of radio nodes 82, receive, at the base station 84, at least one base station 84 reconfiguration message generated in the core network based on the updated QoS policy, and reconfigure the base station 84 using the base station reconfiguration message to thus enforce the updated QoS policy on the radio nodes comprised in the set of radio nodes 82.

According to a fourth aspect, there is provided a computer program element comprising machine readable instructions which, when executed by a processor, causes the processor to execute the computer implemented method according to the first aspect, or its embodiments.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

## Claims

1. A computer implemented method (40) of radio node prioritization in a radio system (80), comprising:
obtaining (41), for a set of radio nodes (82) communicably coupled to a base station (84), enrichment information for a plurality of radio nodes comprised in the set of radio nodes (82);
obtaining (42), for the plurality of radio nodes comprised in the set of radio nodes (82), corresponding intended quality of service (QoS) profiles;
determining (43; 44), using the obtained enrichment information,
- a first subset of radio nodes comprised in the set of radio nodes (82), wherein each radio node in the first subset has, or is approaching, an unmet QoS state relative to a QoS policy of the each radio node in the first subset, and/or
- a second subset of radio nodes comprised in the set of radio nodes (82) wherein each radio node in the second subset has, or is approaching, an excess QoS state relative to a QoS policy of the each radio node in the second subset, wherein an excess QoS state is one in which a given radio node in the second subset can be downgraded or disabled for a duration;
updating (45) a QoS policy for the plurality of radio nodes comprised in the set of radio nodes (82) based on the determined first subset of radio nodes (82) and/or the determined second subset of radio nodes (82), wherein the updating comprises improving the QoS policy related to a first radio node in the plurality of radio nodes, and/or downgrading the QoS policy related to a second radio node in the plurality of radio nodes;
reconfiguring (46) the base station (84) coupled to the radio nodes comprised in the set of radio nodes (82) based on the updated QoS policy; and
transmitting (47) at least one message to a radio node comprised in the set of radio nodes (82), wherein the at least one message comprises a QoS notification for changing a QoS policy of the radio node comprised in the set of radio nodes (82).

2. The computer implemented method (40) according to claim 1,
wherein determining the first subset of radio nodes based on the set of radio nodes (82) comprises:
collecting all radio nodes of the set of radio nodes (82) with, or approaching, an unmet QoS state;
for each collected radio node, ranking the severity of the unmet QoS state for the corresponding radio node; and
generating an ordered list of the radio nodes in the first subset of radio nodes ordered from the highest severity of the unmet QoS state to the lowest severity of the unmet QoS state.

3. The computer implemented method (40) according to one of claims 1 or 2,
wherein determining the second subset of radio nodes based on the set of radio nodes (82) comprises:
collecting all radio nodes of the set of radio nodes (82) with an excess QoS state;
for each collected radio node, ranking the severity of the excess QoS state for the corresponding radio node; and
generating an ordered list of the radio nodes in the second subset of radio nodes ordered from the highest amount of excess QoS state to the lowest amount of excess QoS state.

4. The computer implemented method (40) according to one of claims 2 or 3, wherein reconfiguring the base station (84) coupled to the radio nodes comprised in the set of radio nodes (82) based on the updated QoS policy further comprises:
computing a set of vacated physical resource blocks based on the ordered list of the radio nodes in the second subset of radio nodes;
indicating to the base station (84) the set of vacated physical resource blocks;
indicating to the base station (84) the ordered list of the radio nodes in the first subset of radio nodes.

5. The computer implemented method (40) according to one of the preceding claims, wherein reconfiguring the base station (84) coupled to the radio nodes comprised in the set of radio nodes (82) based on the updated QoS policy further comprises:
communicating, to a controller (86), the updated QoS policy of at least one radio node in the set of radio nodes (82);
receiving, at the base station (84) at least one base station reconfiguration message generated in the core network based on the updated QoS policy; and
reconfiguring the base station (84) using the base station reconfiguration message to thus enforce the updated QoS policy on the radio nodes comprised in the set of radio nodes (82).

6. The computer implemented method (40) according to one of the preceding claims, wherein the enrichment information is **characterized by** one, or more, of a binary flag indicating link health between a respective radio node and the base station (84), an application status of at least one application executing on a radio node, and/or a message from an application executing on a radio node defining a required link quality.

7. The computer implemented method (40) according to one of the preceding claims, wherein the QoS state is **characterized by** at least one of downlink guaranteed flow bit rate, downlink maximum flow bit rate, downlink maximum packet loss rate, uplink guaranteed flow bit rate, uplink maximum flow bit rate, and/or uplink maximum packet loss rate.

8. The computer implemented method (40) according to one of the preceding claims, wherein at least one radio node in the set of radio nodes (82) is comprised in a mobile telephone, an automated mobile robot, or a vehicle.

9. The computer implemented method (40) according to one of the preceding claims,
wherein the computer implemented method is executed by a Radio Access Network Intelligent Controller (RIC) of an Open Radio Access Network (O-RAN).

10. An apparatus (70) comprising:
- a radio interface (76);
- a processor (72); and
- a memory (74);
wherein the processor (72) is configured to.
obtain, for a set of radio nodes (82) communicably coupled to a base station (84), enrichment information for a plurality of radio nodes comprised in the set of radio nodes (82);
obtain, for the plurality of radio nodes comprised in the set of radio nodes (82), corresponding intended quality of service (QoS) profiles;
determine, using the obtained enrichment information,
- a first subset of radio nodes comprised in the set of radio nodes (82) wherein each radio node in the first subset has, or is approaching, an unmet QoS state relative to a QoS policy of the each radio node in the first subset, and/or;
- a second subset of radio nodes comprised in the set of radio nodes (82) wherein each radio node in the second subset has, or is approaching, an excess QoS state relative to a QoS policy of the each radio node in the second subset, wherein an excess QoS state is one in which a given radio node in the second subset can be downgraded or disabled for a duration;
update a QoS policy for the plurality of radio nodes comprised in the set of radio nodes (82) based on the determined first subset of radio nodes (82) and/or the determined second subset of radio nodes (82, wherein the updating comprises improving the QoS policy related to a first radio node in the plurality of radio nodes, and/or downgrading the QoS policy related to a second radio node in the plurality of radio nodes;
reconfigure the base station (84) coupled to the radio nodes comprised in the set of radio nodes (82) based on the updated QoS policy; and
transmit at least one message to a radio node comprised in the set of radio nodes (82), wherein the at least one message comprises a QoS notification for changing a QoS policy of the radio node comprised in the set of radio nodes (82).

11. A wireless communication system (80) comprising:
- a set of radio nodes (U E1, U E2, U E3, 82);
- a controller (86); and
- a base station (84) communicably coupled to the set of radio nodes (82) and the controller (86);
- a core network (85) communicably coupled to the base station (84) and the controller (86);
wherein the controller (86) is configured to obtain, for the set of radio nodes (82), enrichment information for a plurality of radio nodes comprised in the set of radio nodes (82);
wherein the controller (86) is configured to obtain, for the plurality of radio nodes comprised in the set of radio nodes (82), corresponding intended quality of service (QoS) profiles;
wherein the controller (86) is configured to execute an application,
- wherein the application is configured to determine, using the obtained enrichment information, a first subset of radio nodes comprised in the set of radio nodes (82), wherein each radio node in the first subset has, or is approaching, an unmet QoS state relative to a QoS policy of each radio node in the first subset, and/or
- wherein the controller (86) is configured to determine, via executing the application, using the obtained enrichment information, a second subset of radio nodes comprised in the set of radio nodes (82), wherein each radio node in the second subset has, or is approaching, an excess QoS state relative to a QoS policy of each radio node in the second subset, wherein an excess QoS state is one in which a given radio node in the second subset can be downgraded or disabled for a duration;
wherein the controller (86) is configured to update, via executing the application, a QoS policy for the plurality of radio nodes comprised in the set of radio nodes (82) based on the determined first subset of radio nodes (82) and/or the determined second subset of radio nodes (82), wherein the updating comprises improving the QoS policy related to a first radio node in the plurality of radio nodes, and/or downgrading the QoS policy related to a second radio node in the plurality of radio nodes;
wherein the controller (86) is configured to reconfigure the base station (84) coupled to the radio nodes comprised in the set of radio nodes (82) based on the updated QoS policy; and
wherein the controller (86) is configured to transmit at least one message to a radio node comprised in the set of radio nodes (82), wherein the at least one message comprises a QoS notification for changing a QoS policy of the radio node comprised in the set of radio nodes (82).

12. The wireless communication system (80) according to claim 11,
wherein the base station (84) coupled to the radio nodes comprised in the set of radio nodes (82) based on the updated QoS policy is further configured to:
communicate, to the controller (86), a set of vacated physical resource blocks based on the ordered list of the radio nodes in the second subset of radio nodes; and
the controller is configured to indicate to the base station (84) the set of vacated physical resource blocks assigned to one or more radio nodes registered in the first subset of radio nodes.

13. The wireless communication system (80) according to claim 11,
wherein the base station (84) coupled to the radio nodes comprised in the set of radio nodes (82) is further configured, based on the updated QoS policy, to:
communicate, to the controller (86), the updated QoS policy of at least one radio node in the set of radio nodes (82);
receive, at the base station (84) at least one base station (84) reconfiguration message generated in the core network based on the updated QoS policy; and
reconfigure the base station (84) using the base station reconfiguration message to thus enforce the updated QoS policy on the radio nodes comprised in the set of radio nodes (82).

14. The wireless communication system (80) according to one of claims 11 to 13,
wherein at least one radio node in the set of radio nodes (82) is comprised in a mobile telephone, an automated mobile robot, or a vehicle, and/or
wherein the controller (86) is comprised in an Open Radio Access (O-RAN).

15. A computer program element comprising machine readable instructions which, when executed by a processor, causes the processor to execute the computer implemented method according to one of claims 1 to 9.
